# EUROPEAN PATENT SPECIFICATION

(11) **EP 1 279 269 B1**
(45) Date of publication and mention of the grant of the patent: **02.11.2006**
(21) Application number: 00929371.3
(22) Date of filing: 17.04.2000
(51) Int. Cl.: H04L 29/12, H04M 7/00

(54) **METHOD AND SYSTEM FOR ESTABLISHING A COMMUNICATION BETWEEN A FIRST AND A SECOND COMMUNICATION ENTITY**
VERFAHREN UND SYSTEM ZUM KOMMUNIKATIONSAUFBAU ZWISCHEN EINER ERSTEN UND EINER ZWEITEN KOMMUNIKATIONSEINHEIT
PROCEDE ET SYSTEME D'ETABLISSEMENT DE COMMUNICATION ENTRE UNE PREMIERE ET UNE SECONDE ENTITE DE COMMUNICATION

(43) Date of publication of application: 29.01.2003
(73) Proprietor: Nokia Corporation, 02150 Espoo (FI)
(72) Inventor: IVANOV, Nedko, Fleet Hampshire, GU52 0YT England (GB); KISS, Krisztian, H-1026 Budapest (HU); BERTENYI, Balazs, H-1118 Budapest (HU)
(74) Representative: TBK-Patent
(86) International application number: PCT/EP2000/003477
(87) International publication number: WO 2001/080526

(56) References cited:
- WO-A-97/22211
- WO-A-99/62242
- ANDREW S.TANENBAUM: "Computer Network" 1996 , PRENTICE-HALL INC , AMSTERDAM XP002158193 ISBN: 0-13-394248-1 page 622 -page 630

## Description

The invention relates to a method and system for establishing a communication connection between a first entity located in a first network and e.g. originating a communication, and a second entity located in a second network and representing e.g. the communication terminating entity. The second network may be an internet. The term "internet" as used herein, includes any network for transmitting information in accordance with one or more specific sets of protocols. The internet is preferably a wide area network or a combination of large computer networks. One example of such an internet is the commonly known "Internet" using, for instance the TCP/IP protocol (Transmission Control Protocol/Internet Protocol).

WO-A-97-22211 discloses a system wherein service logic and data are placed on a server which is accessible over the Internet, permitting to access telephone data such a time-of-day routing or diversion number information of a user. A calling party can determine before placing a call over the PSTN a number to call by accessing the phone page of the intended called party. This phone page is accessible to the PSTN for service provision. The service logic and data can be maintained by the user independently of the PSTN on a server of the user's choice so that the PSTN can access the user's service logic and data over the Internet.

WO 99/62242 refers to a method and apparatus for internet telephony wherein the communication originating entity and the communication terminating entity are located in different network interconnected via the internet. The communication is performed using the internet so as to be able to perform a long-distance call with reduced costs. The system includes a database connected to the internet and containing a plurality of phone numbers and corresponding network addresses. For establishing a communication, a local encoder communicating with the calling entity accesses the database and receives the internet address assigned to a remote network access encoder communicating with the entity to be called.

WO 99/13633 describes an internet telephony system wherein a long-distance call is signalled from the calling party to the called party. Both the calling party and the called party communicate with their associated access devices for being assigned an internet address. The internet address of the called party is then sent via email to the calling party which subsequently establishes a connection to the called party by using the internet address thereof.

When the system of WO 99/62242 is to be adapted to handle international calls as well, the database needs to have a very large capacity for mapping all globally existing phone numbers to internet addresses. Furthermore, the server managing this database will be heavily loaded for performing all necessary updates caused by changing phone numbers, changes of users assigned to phone numbers, addition of new phone number, call restrictions or the like.

With regard to the system according to WO 99/13633, the establishment of a connection requires the intermediate generating and sending of an e-mail which necessitates the provision of devices having an appropriate functionality, and causes a delay in establishing the communication not only because of the necessity of generating and reading the e-mail, but also due to the establishing of the connection again using the indicated IP address.

There exists therefore a need for a method and system being able.to establish a communication between two entities located in different networks using an internet, without necessity of providing a large-capacity global database or transmission of e-mails.

The present invention provides a method as defined in claim 1, or any of the dependent method claims.

Furthermore, the invention provides a system as defined in claim 9, or any of the dependent system claims.

The method and system are able to obtain the necessary addresses such as internet addresses without necessity of providing a large-capacity global database mapping all worldwide existing identifications such as phone numbers to such addresses, e.g. internet addresses. Therefore, the maintenance and update service associated with such large global database is eliminated.

According to a preferred implementation of the invention, international calls can be connected by performing several steps. First, a first database is accessed which maps the identification, e.g. an international country code of a dialled party number, to an internet address of a second database assigned to a part of a network such as a geographic region, e.g. a respective country (or group of countries). The first network entity, e.g. a calling party (calling party designates any entity originating or transmitting a request for connection to another entity (e.g. called or terminating entity) located in another network) then accesses the second database using the internet address thereof, after receiving it from the first database. Depending on the information received from the second database, the communication can be directed to a third database having information for locating and/or accessing a device for establishing a connection to the called network entity. The establishment of a connection is therefore performed in several steps.

The invention enables the use of identification such as identifier numbers other than IP addresses when making calls in an IP network. There is no need to provide a global DNS (Domain Name System) type address translation database. The updating of such a database would require a lot of resources from the server, and cause of lot of signalling traffic.

The invention may be used in connection with voice over IP-based networks (VoIP) and can provide significant reductions of international call charges by mainly or exclusively using IP-based networks such as the internet. The term "communication" as used here not only includes telephone calls transmitting voice but generally designates any communication between two entities such as pure voice transmission, exclusive data transmission or combined transmission of voice, data and/or information of other type.

### BRIEF DESCRIPTION OF THE FIGURES

Fig. 1 shows a graphical representation of the basic structure and functioning of an embodiment of the invention;
Fig. 2 illustrates the signalling and information flow during a call initiating phase of the embodiment shown in Fig. 1;
Fig. 3 shows the method steps performed in the embodiment of Figs. 1, 2;
Fig. 4 illustrates an example not claimed;
Fig. 5 shows another example not claimed; and
Fig. 6 illustrates the signalling and information flow during a call initialising phase of the example shown in Fig. 5.

### DETAILED DESCRIPTION OF AN EMBODIMENT OF THE INVENTION

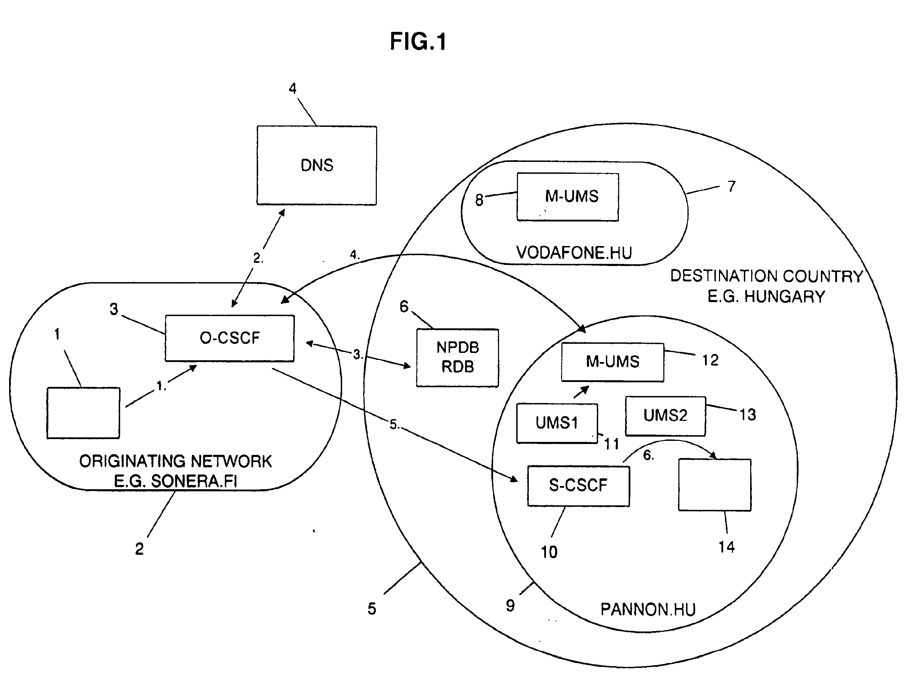

Fig. 1 shows a simplified block diagram of an embodiment of a system according to the invention wherein numbered arrows have been added for indicating the information flow during call setup. In the example shown in Fig. 1, a call is placed from a communication originating entity 1 which is located in, and managed (served) by a network 2 which here is called originating network and is located in a certain country, for example Finland. The originating network may for instance be the network Sonera. The communication originating entity 1 is, in the present example, a data equipment such as a computer or laptop but may also be a normal telephone (fixed or mobile phone) or any other information transmitting entity. The entity 1 may e.g. be a terminal (e.g. exclusive data terminal, terminal with voice transmitting and/or receiving equipment, or the like). The entity 1 may have any arbitrary structure provided that is able to initiate a communication request. The term "communication" as used here comprises all types of communication such as bi-directional, uni-directional calls or information transmittal, pure data transmission, voice calls, and the like. The communication may also be a signalling-only call wherein no information other than signalling information is transmitted.

When the entity 1, or the user thereof, is intending to start a communication to another entity (which will be termed "communication terminating entity" in the following description) it sends a set-up request to a control device 3 controlling the call-set-up process, call termination process and/or call handling/managing services such as packetising of information elements to be transmitted/received.

The control device 3 may be implemented as hardware or software solution. In Fig. 1, the control device 3 is termed "O-SCSF" (Originating Call State Control Function), as defined in "Release 2000 Architecture". The call state control function provides a call control function performing call set-up/termination and state/event management and also serves as incoming call gateway for the routing of incoming calls. Furthermore, the call state control function performs address handling, such as analysis, translation, modification, if required, address portability, mapping of alias addresses, or temporary address handling for inter-network routing, and also may communicate with a home subscriber server providing home location register (HLR)like functionality.

The system furthermore comprises a database 4 storing a look-up table containing the country codes and the IP addresses of national databases 6. The database 4 may be contained in a DNS (Domain Name System)server and may be a globally addressable database being accessible from every part of the world or may be implemented as one or more databases assigned to a country or a group of countries or networks. In the latter case, a plurality of databases 4 will be provided for different countries or different country or network groups.

In the example shown in Fig. 1, the international call is directed to another country designated by the reference numeral 5 which country may for instance be Hungary (destination country). Several different networks 7, 9 exist in the destination country which may, in the shown example, have the domain names "Vodafone.hu" and "Pannon.hu",. Each externally call accessible network of the destination country has at least one call control device such as 10, and one main database such as 12, and one or more HLR-like databases such as 11 for handling incoming and outgoing calls or information streams of other type, e.g. packetised data transmission in accordance with IP definitions.

Each country (or country group) preferably contains a national database 6 which may be stored in a server and contains a table correlating the national phone numbers to IP addresses of HLR-like control devices of the networks containing information on the location of the terminals or user equipments assigned to the phone numbers. These control devices contain information and programs for accessing databases containing location information on the present location of called terminals or user equipments. In the embodiment shown in Fig. 1, each network 7, 9 has its own control device 8, 12 containing this location information or programs for accessing databases containing this location information.
According to Fig. 1, the control devices 8, 12 are termed "M-UMS" (Master User Mobility Server) which communicate with one or more user mobility servers (UMS) 11, 13 assigned to only one network and being hierarchically subordinated to the main user mobility server. Each user mobility server (UMS1, UMS2) 11, 13 stores service profile information for the multimedia domain, and stores service mobility or serving CSCF related information for the users. The user mobility servers may also generate, store and/or manage security data and policies
The call terminating entity to be called by the call originating entity 1 is a terminal 14 which may be a data equipment, mobile or fixed phone, or any other type of entity able to respond to a call.

Although the drawing shows only one network for the call originating country (e.g. Finland) and only two networks for the call terminating or destination country (e.g. Hungary), the countries will usually contain a plurality of such networks which may communicate with each other using internationally standardised protocols such as the IP protocol or any other protocol suitable for packetised or non-packetised data speech or information transmission.

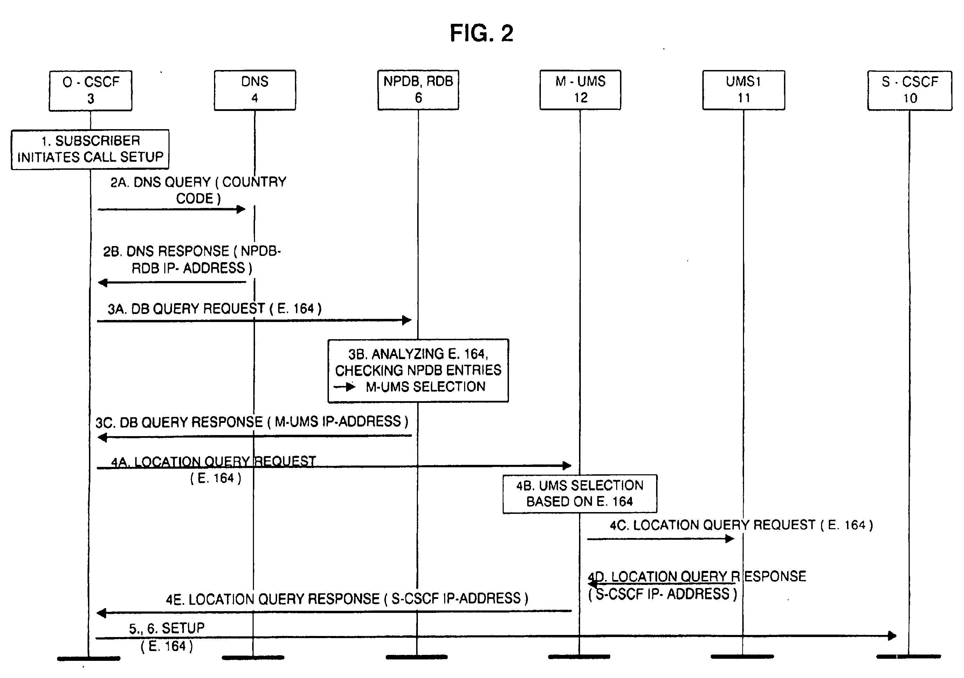

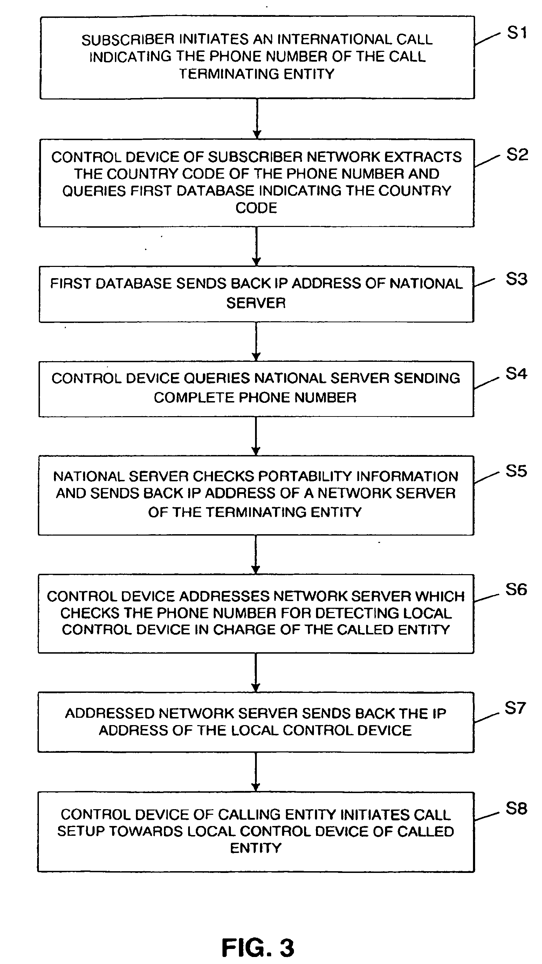

With reference in particular to figures 2 and 3, and the numbered arrows shown in Fig. 1, the call setup and routing procedure will now be described. As first step, a subscriber using the equipment 1 registered and attached to the control device 3 initiates a call setup by inputting a phone number of the party to be called (call terminating entity 14). The phone number is preferably in accordance with the international standard ITU , section E.164, which consists of a country code designating the country in which the called party is located, a national destination code allocated to each area part of the country, or to each PLMN or PSTN, and a subscriber number. This first step corresponds to arrow 1. in Fig. 1, block inscription 1. of Fig. 2, and step S1 (Fig. 3). The control device 3 extracts the country code from the phone number and conducts a query to the database 4 using only the country code.

The database 4 checks the country code and reads, from its internal table, the IP address of the national database 6 assigned to the country indicated by the country code.

The DNS server storing this database 4 contains an extension to the existing domain name/IP address table. As an alternative, it is also possible to store the database of country code/IP address of national server relationship in the control device 3 or another part of network 2 or even external to the network 2. The database 4 may also store the "country code - national database domain name" association. In the latter case, the domain name server 4 may be used for translating the domain name of the national server, received as result of the query using the country code, into the IP address thereof. The DNS query and response correspond to arrow 2. In Fig. 1, steps 2A, 2B in Fig. 2, and steps S2, S3 of Fig. 3. The access to the database 4 may be performed using the IP address thereof, i.e. by means of an internet access, or an IP-based network-internal access.

Subsequently, the control device 3 starts a new request which is now directed to the national server (database) 6 assigned to the destination country designated by the country code. The control device 3 uses the IP address received from database 4 for accessing the national database 6 so that an IP-based access is performed. The control device 3 sends the complete phone number (country code, national destination code and subscriber number) to the national database 6. The routing database part (RDB) thereof analyses the received phone number and checks the number portability database (NPDB) for portability information.

The structure and function of a number portability database is explained in e.g. ETSI EN 301 716 (European Telecommunications Standards Institute), V7.1.0 (1999-08). Number portability is of advantage for the subscribers because they can keep their phone number even when moving to another network in their country. However, for tracing such ported numbers, a number portability database is established. This database also contains routing numbers for indicating proper routing information to trace a ported or temporarily roaming subscriber equipment.

The database 6 contains a look-up table storing the national phone numbers and the assigned IP addresses of a network control device being able to locate the exact position of the user equipment. In this example, the IP address of the main user mobility server (M-UMS) 12 is stored in database 6 in correlation to the phone number indicated in the query. This IP address is then sent back to the control device 3. In the present example, the destination network 9 is an all-IP network, wherein all accessible equipments can be addressed using IP-based addresses.

These steps correspond to arrow 3. In Fig. 1, steps 3A, 3B and 3C of Fig. 2, and steps S4, S5 of Fig. 3.

The control device 3 now starts a third IP-based inquiry, that is a location query request with the network server (M-UMS) 12 by using the IP address indicated in the response of database 6. This location query request sent to the server 12 contains the phone number which is analysed by server 12 for detecting the local control device 10 being in charge of the called entity 14. For obtaining this information, the server 12 accesses one of the subordinate servers 11, 13 (here: server 11) containing the location information, and then sends back the received information (IP address of control device 10, to control device 3). In detail, the server 12 analyses the phone number and finds the user mobility server responsible for the called subscriber based on the ranging concept of the phone numbers of E.164 standard. The server 12 also holds information on subscriber's numbers of E.164 type that have been ported to that network, in association with the user mobility server where they are registered. These steps correspond to arrow 4. in Fig. 1, steps 4A to 4E of Fig. 2, and steps S6, S7 of Fig. 3.

With regard to steps 4C and 4D of Fig. 2, the server 12 initiates a location query towards that subordinate server (here: server 11) where the user subscription is located. This server 11 returns the IP address of the serving control device (serving call state control function) 10 to the subordinate server 12.

The system and method may be implemented in such a manner that the server 11 is directly sending the IP address of control device 10 to control device 3 as a response. However, it is preferred, for security reasons, to implement the system and method in such a manner that server 11 (or any other server having the location information of control device 10) sends this location information only to the main server 12 which then transmits this information to control device 3. When proceeding in this way, the internal network structure is not disclosed to outside networks. Furthermore, it is not necessary to provide security mechanisms such as fire walls in every user mobility server 11, 13, but only in the superordinate server 12.

After receipt of the IP address of the local control device 10 in charge of handling calls directed to equipment 14, the control device 3 initiates the final call setup request to control device 10, indicating the phone number (E.164 type). The control device 10 detects the intended call and performs a set-up procedure with device 14. The alerting and/or information transmitting steps of control device 10 and entity 14 are well known and will therefore not be described in detail. The connection is now ready to transmit data, voice or other type of information either unidirectional or bi-directional depending on the system and activated services.

These final steps correspond to arrows 5., 6. in Fig. 1, steps 5., 6. in Fig. 2, and step S8 in Fig. 3.

The described method and system are therefore able to connect calls using conventional phone numbers in all-IP networks or other types of inter-networks such as IP-based networks. The basic idea is to use a logical address translation mechanism. The control device 3 to which the calling subscriber sends the set up request contacts the DNS server 4 which translates the country code of the phone number of E.164 type into an identity and IP address of a national server, i.e. database 6, and returns this information to the control device 3. The national server 6 accessed by control device 3 using the IP address thereof, translates the network identity part such as the national destination code or network destination code of the phone number into the identity of the operator (or a network), and to the address of the corresponding database, here the M-UMS 12. This identity and address is again sent back to the control device 3 which now sends the query to M-UMS database 12 of the network 9 of the called subscriber. The database 12 returns the identity such as IP address of the serving control device of the called subscriber whereupon the control device 3 performs the set-up with the indicated control device, and the call is established.

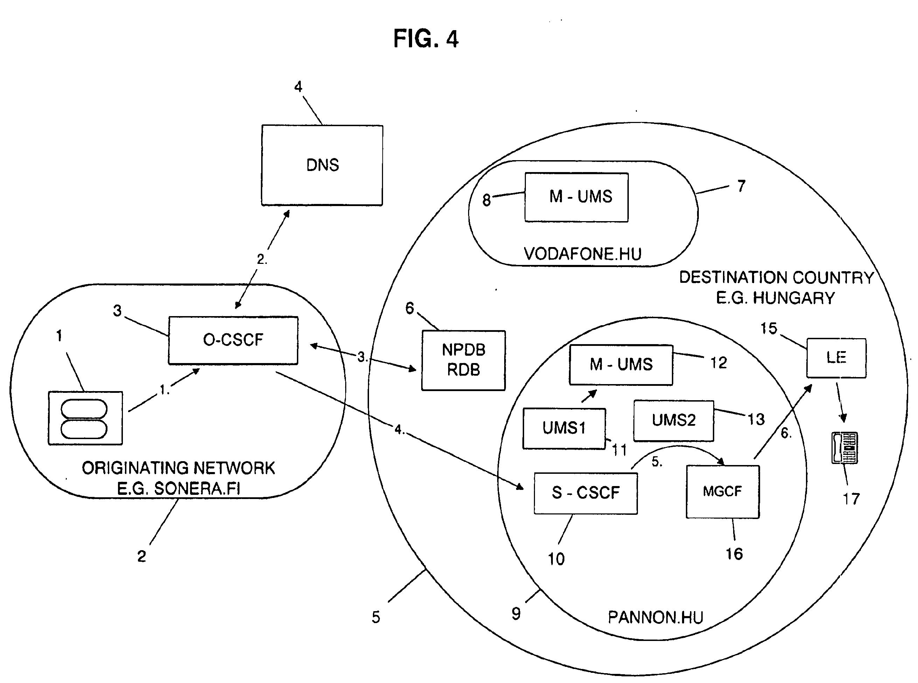

Figs. 4 to 6 refer to the case of routing calls to a subscriber of a switched circuit network. In detail, Figs. 4 to 6 deal with cases in which the called party 17 is no direct part of the IP-based network such as network 9 but may be accessed via a local exchange 15 for connecting the call to the called entity which may be based on analogue or digital signalling and traffic, e.g. ISDN-based. The local exchange 15 is part of the destination country but resides outside the IP-based networks 7, 9.

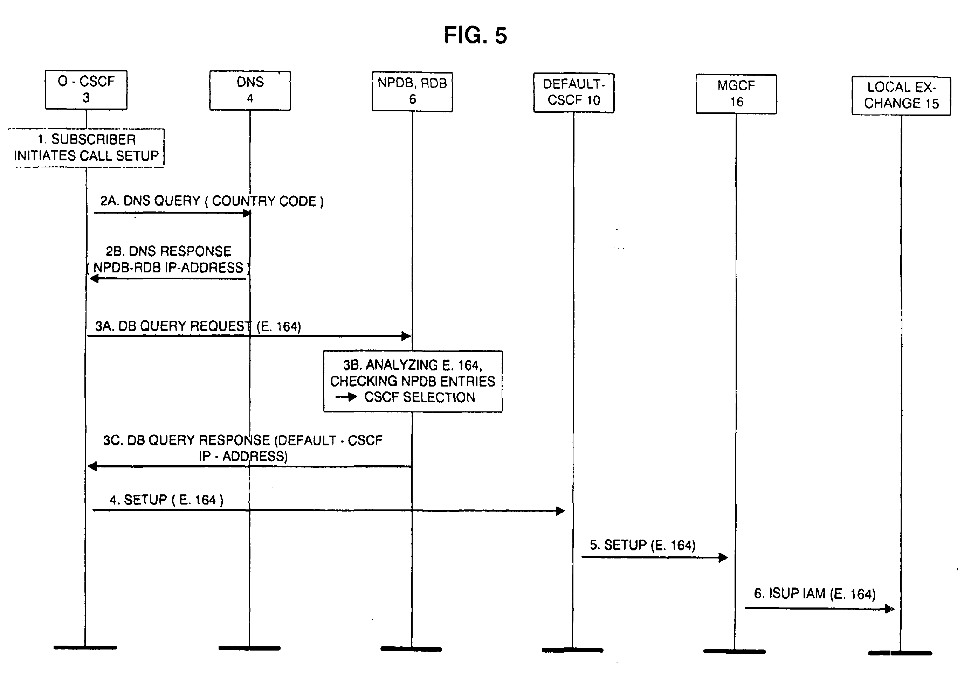

Figs. 4 and 5 illustrate a case of using optimisation, i.e. using the IP-based networks as much as possible, with IP-based data and signalling transmission between the originating country 2 and the destination country 5. This allows significant reduction of the total costs of the calls.

As shown in Fig. 4, the call-transmitting IP-based network 9 comprises a gateway 16 for handling the communication between the IP-based network 9 and the local exchange 15. Such gateways are known. Here, the gateway 16 is designed as media gateway control function (MGCF) as defined in release 2000. The gateway may also be of other conventional structure providing the gateway function.

When requesting the set-up of a call by the calling entity 1 to the called entity 17 (here: analogue or ISDN-based terminal), the steps (arrows) 1., 2., and 3. of Fig. 1 (corresponding to steps 1. to 3. of Fig. 2 and steps S1 to S4 of Fig. 3) are performed in the same manner as already described above.

As response to the database query of the database 6 using the complete phone number (E.164 standard), the routing database part (server) of database 6 analyses the phone number and checks the number portability database part for portability information, similar to the embodiment shown in Figs. 1 to 3 and discussed above. The database 6 stores, in relation to the phone numbers (E.164) IP addresses of control devices (e.g. CSCF) of an all-IP-based network operator of the destination country in case an optimisation agreement for PSTN (public switched telephone network) calls is effective between the this all-IP-based network operator and the operator of called entity 17. (here: between the network 9 and the network of called entity 17). This optimisation agreement defines that international calls between entities one of which not being directly accessible by an IP-based networks, are to be handled using IP-based networks and communication as much as possible (mainly in order to reduce call charges for international calls).

When such an optimisation agreement is in effect, the database 6 is loaded with the IP address of the control device 10 of network 9 (in the present example) in relation to all phone numbers of the destination country for which the optimisation agreement is effective.
The response of database 6 to control device 3 (arrow 3 of Fig. 4 and arrow 3C. of Fig. 5) indicates the IP address of the default control device 10 to be selected if optimisation is activated, i.e. if calls are to be routed to called entity 17 using IP-based network such as network 9 as far as possible.

The control device 3 initiates, as next step, a call set-up towards the control device 10 indicated in the response of database 6 using the IP address thereof, i.e. establishing an IP-based connection between control devices 3 and 10, indicating the phone number of called entity 17. This step corresponds to step 4 shown in Fig. 5. The control device 10 contacts, in step 5. of Fig. 5, the local gateway 16 of its IP-based network 9 which then forwards (step 6. of Fig. 5) the call setup initiation to the local exchange 15 of the switched circuit network to which the subscriber to be called (entity 17) is subscribed. In step 6. Of Fig. 5, the term "ISUP IAM" means "ISDN user part, initial address message".

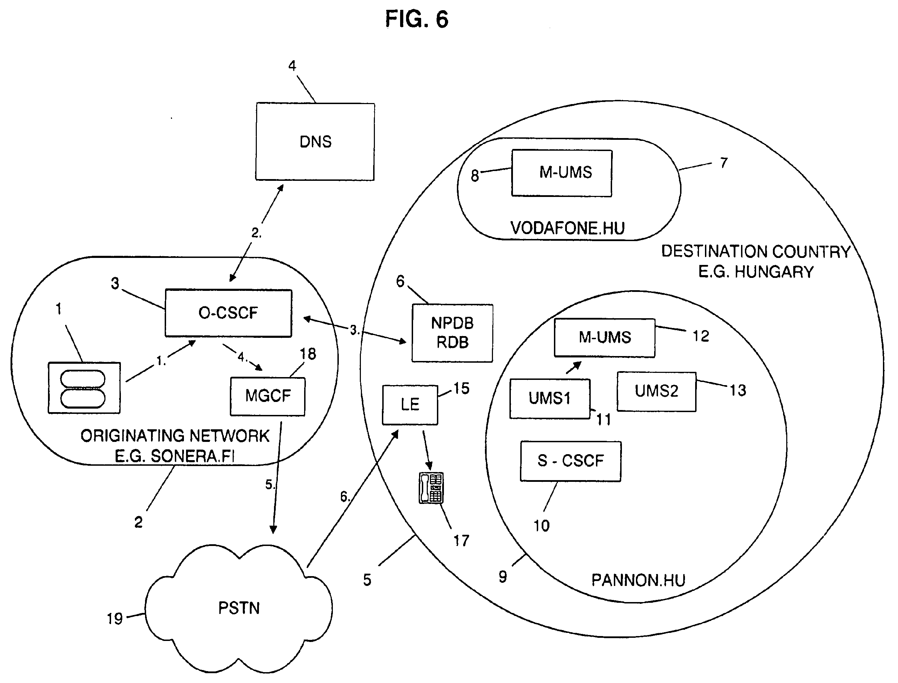

Fig. 6 relates to the case of handling international calls to a subscriber of a switched circuit network of a different country when no optimisation has been selected. In such a case, the database 6 addressed in step 3. (Fig. 6) does not return any IP address of a control device (CSCF) of an IP based network of the destination country. The system will then route the call in a conventional manner via a public switched telephone network (PSTN) 19 so that a conventional international call is set-up. For accessing the PSTN 19, the originating IP-based network 2 performs a setup to a gateway (e.g. a media gateway control function MGCF) 18 serving as gateway between the IP-based network 2 and the PSTN 19. The PSTN 19 initiates the set-up with the local exchange 15 located in a different country, for switching the call to the entity 17.

Although steps 1., 4., 5. and 6. of Fig. 6 may be conventional ones and may correspond to the normal handling of international calls, the embodiment of Fig. 6 is different from the conventional process by performing the steps 2., and 3., enabling, if possible and activated, a routing of the call via an IP-based network of the destination country.

Although the invention has been described by referring to preferred embodiments, it can also be implemented using networks based on different standards and protocols such as BGP (border gateway protocol), CIDR (classless inter domain routing), EGP-based routing or the like. Also the network elements of the invention may vary. For example, the role of CSCF can be taken by the traditional Mobile services Switching Center MSC, or an MSC server, which handles the signaling traffic traditionally handled by MSC, but unlike an MSC does not act as a switch for the user data.

## Claims

1. Method for establishing a connection between a first network entity located in a first network and a second network entity located in a second network, wherein the first network entity (1) or a serving entity (3) sends an identification of the second network entity containing at least a first and a second part, to a first database (4) which translates the first part into an internet address of a second database (6) assigned to a part of the network indicated by the first part, and returns this internet address to the first network entity (1) or the serving entity (3) which then addresses the second database (6) using the internet address thereof and indicating the identification or at least the second part thereof, the second database (6) returning, to the first network entity (1) or the serving entity (3), an address of a third database wherein
the identification is a phone number as defined in ITU-T standard E.164 containing, as first part, a country code and, as second part, a national number part of the second network entity,
the second database (6) is a number portability database for tracing ported numbers;
the third database is a user mobility server, UMS (12) storing service mobility or serving CSCF related information for users; the user mobility server (12) returns the address of a call state control function, CSCF, (10) of the second network entity; and
the first network entity (3) initiates a call set up towards the CSCF (10) of the second network entity.

2. Method according to claim 1, wherein the first network entity is a communication originating entity.

3. Method according to claim 2, wherein the communication originating entity is a Call State Control Function, CSCF, a Mobile Switching Center, MSC, or an MSC server.

4. Method according to any of the preceding claims,
wherein the second network entity is a communication terminating entity.

5. Method according to any one of the preceding claims,
wherein the first database is stored in a DNS server.

6. Method according to any one of the preceding claims,
wherein the third database is stored in a master user mobility server which sends a location request to the user mobility server.

7. Method according to claim 6, wherein the user mobility server returns the internet address to the master user mobility server which transmits same to the first network entity.

8. Method according to anyone of the preceding claims,
wherein the internet address is an IP (internet protocol) address.

9. System for establishing a connection between a first network entity (1) located in a first network (2) and a second network entity (14, 17) located in a second network (5, 9), wherein the first network entity (1) or a serving entity (3) is adapted to send an identification of the communication terminating entity containing a first and a second part, to a first database device (4) storing a table for translating the first part into an internet address of a second database device (6) assigned to a part of the network indicated by the first part, the first database device (4) being adapted to return this internet address to the first network entity (1) or the serving entity (3) being adapted to address the second database device (6) using the internet address thereof and indicating the identification or at least the second part thereof, the second database device (6) being adapted to return, to the first network entity (1) or the serving entity (3), an address of a third database device (12) for establishing a connection to the second network entity,
wherein the identification is a phone number as defined in ITU-T standard E.164 containing, as first part, a country code and, as second part, a national number part of the second network entity, and
the second database device (6) is a number portability database for tracing ported numbers;
the third database device (12) is a user mobility server, UMS, storing service mobility or serving CSCF related information for users;
the user mobility server (12) is adapted to return the address of a CSCF, call state control function, CSCF, (10) of the second network entity; and
the first network entity (3) is adapted to initiate a call set up towards the CSCF (10) of the second network entity.

10. System according to claim 9, wherein the first network entity is a communication originating entity.

11. System according to claim 9 or 10, wherein the second network entity is a communication terminating entity.

12. System according to any one of claims 9 to 11, wherein the first database device is stored in, or part of, a DNS server.

13. System according to any one of claims 9 to 12, wherein the second database device is contained in a master user mobility server which is adapted to send a location request to the user mobility server which returns the internet address of the second network entity, or the internet address of a control device (10, 16) controlling the communication with the second network entity.

14. System according to claim 13, wherein the user mobility server is adapted to return the internet address to the master user mobility server which transmits same to the first network entity.

## Patentansprüche

1. Verfahren zum Aufbauen einer Verbindung zwischen einer in einem ersten Netzwerk befindlichen ersten Netzwerkeinheit und einer in einem zweiten Netzwerk befindlichen zweiten Netzwerkeinheit, wobei die erste Netzwerkeinheit (1) oder eine Diensteinheit (3) eine zumindest einen ersten und einen zweiten Teil enthaltende Identifikation der zweiten Netzwerkeinheit an eine erste Datenbank (4) sendet, die den ersten Teil in eine Internetadresse einer zweiten Datenbank (6) umsetzt, die einem durch den ersten Teil bezeichneten Teil des Netzwerkes zugeordnet ist, und diese Internetadresse an die erste Netzwerkeinheit (1) oder die Diensteinheit (3) zurückgibt, die dann die zweite Datenbank (6) adressiert, wobei deren Internetadresse verwendet wird und die Identifikation oder zumindest der zweite Teil davon bezeichnet wird, wobei die zweite Datenbank (6) an die erste Netzwerkeinheit (1) oder die Diensteinheit (3) eine Adresse einer dritten Datenbank zurückgibt, wobei
die Identifikation eine wie in ITU-T-Standard E.164 definierte Telefonnummer ist, die als ersten Teil einen Ländercode und als zweiten Teil einen nationalen Nummernteil der zweiten Netzwerkeinheit enthält,
die zweite Datenbank (6) eine Nummernportabilitätsdatenbank zum Verfolgen portierter Nummern ist;
die dritte Datenbank ein Nutzer-Mobilitätsserver UMS
(12) ist, der auf Dienstmobilität oder Dienst-CSCF bezogene Informationen für Nutzer speichert;
der Nutzer-Mobilitätsserver (12) die Adresse einer Rufzustandssteuerfunktion CSCF (10) der zweiten Netzwerkeinheit zurückgibt; und
die erste Netzwerkeinheit (3) einen Rufaufbau in Richtung der CSCF (10) der zweiten Netzwerkeinheit einleitet.

2. Verfahren gemäß Anspruch 1, wobei die erste Netzwerkeinheit eine eine Kommunikation begründende Einheit ist.

3. Verfahren gemäß Anspruch 2, wobei die eine Kommunikation begründende Einheit eine Rufzustandssteuerfunktion CSCF, eine Mobilvermittlungsstelle MSC oder ein MSC-Server ist.

4. Verfahren gemäß einem der vorhergehenden Ansprüche, wobei die zweite Netzwerkeinheit eine eine Kommunikation abschließende Einheit ist.

5. Verfahren gemäß einem der vorhergehenden Ansprüche, wobei die erste Datenbank in einem DNS-Server gespeichert ist.

6. Verfahren gemäß einem der vorhergehenden Ansprüche, wobei die dritte Datenbank in einem Haupt-Nutzer-Mobilitätsserver gespeichert ist, der eine Standortanfrage an den Nutzer-Mobilitätsserver sendet.

7. Verfahren gemäß Anspruch 6, wobei der Nutzer-Mobilitätsserver die Internetadresse an den Haupt-Nutzer-Mobilitätsserver zurückgibt, welcher diese an die erste Netzwerkeinheit übermittelt.

8. Verfahren gemäß einem der vorhergehenden Ansprüche, wobei die Internetadresse eine IP- (Internetprotokoll-) Adresse ist.

9. System zum Aufbauen einer Verbindung zwischen einer in einem ersten Netzwerk (2) befindlichen ersten Netzwerkeinheit (1) und einer in einem zweiten Netzwerk (5, 9) befindlichen zweiten Netzwerkeinheit (14, 17), wobei die erste Netzwerkeinheit (1) oder eine Diensteinheit (3) angepasst ist, eine einen ersten und einen zweiten Teil enthaltende Identifikation der eine Kommunikation abschließenden Einheit an eine erste Datenbankvorrichtung (4) zu senden, die eine Tabelle zum Umsetzen des ersten Teils in eine Internetadresse einer zweiten Datenbankvorrichtung (6) speichert, die einem durch den ersten Teil bezeichneten Teil des Netzwerkes zugeordnet ist, wobei die erste Datenbankvorrichtung (4) angepasst ist, diese Internetadresse an die erste Netzwerkeinheit (1) oder die Diensteinheit (3) zurückzugeben, die angepasst ist, die zweite Datenbankvorrichtung (6) unter Verwendung deren Internetadresse und unter Bezeichnung der Identifikation oder zumindest des zweiten Teils davon zu adressieren, wobei die zweite Datenbankvorrichtung (6) angepasst ist, eine Adresse einer dritten Datenbankvorrichtung (12) an die erste Netzwerkeinheit (1) oder die Diensteinheit (3) zurückzugeben, um eine Verbindung zu der zweiten Netzwerkeinheit aufzubauen, wobei
die Identifikation eine wie in ITU-T-Standard E.164 definierte Telefonnummer ist, die als ersten Teil einen Ländercode und als zweiten Teil einen nationalen Nummernteil der zweiten Netzwerkeinheit enthält, und
die zweite Datenbankvorrichtung (6) eine Nummernportabilitätsdatenbank zum Verfolgen portierter Nummern ist;
die dritte Datenbankvorrichtung (12) ein Nutzer-Mobilitätsserver UMS ist, der auf Dienstmobilität oder Dienst-CSCF bezogene Informationen für Nutzer speichert;
der Nutzer-Mobilitätsserver (12) angepasst ist, die Adresse einer Rufzustandssteuerfunktion CSCF (10) der zweiten Netzwerkeinheit zurückzugeben; und
die erste Netzwerkeinheit (3) angepasst ist, einen Rufaufbau in Richtung der CSCF (10) der zweiten Netzwerkeinheit einzuleiten.

10. System gemäß Anspruch 9, wobei die erste Netzwerkeinheit eine eine Kommunikation begründende Einheit ist.

11. System gemäß Anspruch 9 oder 10, wobei die zweite Netzwerkeinheit eine eine Kommunikation abschließende Einheit ist.

12. System gemäß einem der Ansprüche 9 bis 11, wobei die erste Datenbankvorrichtung in einem DNS-Server gespeichert oder ein Teil davon ist.

13. System gemäß einem der Ansprüche 9 bis 12, wobei die zweite Datenbankvorrichtung in einem Haupt-Nutzer-Mobilitätsserver enthalten ist, der angepasst ist, eine Standortanfrage an den Nutzer-Mobilitätsserver zu senden, der die Internetadresse der zweiten Netzwerkeinheit oder die Internetadresse einer die Kommunikation mit der zweiten Netzwerkeinheit steuernden Steuervorrichtung (10, 16) zurückgibt.

14. System gemäß Anspruch 13, wobei der Nutzer-Mobilitätsserver angepasst ist, die Internetadresse an den Haupt-Nutzer-Mobilitätsserver zurückzugeben, der diese an die erste Netzwerkeinheit übermittelt.

## Revendications

1. Procédé pour établir une connexion entre une première entité de réseau située dans un premier réseau et une seconde entité de réseau située dans un second réseau, dans lequel la première entité de réseau (1) ou une entité de desserte (3) envoient une identification de la seconde entité de réseau contenant au moins une première et une seconde parties, à une première base de données (4) qui traduit la première partie en une adresse Internet d'une seconde base de données (6) assignée à une partie du réseau indiquée par la première partie, et qui retourne cette adresse Internet à la première entité de réseau (1) ou à l'entité de desserte (3) qui adressent ensuite la seconde base de données (6) à l'aide de l'adresse Internet de celle-ci et en indiquant l'identification ou au moins la seconde partie de celle-ci, la seconde base de données (6) retournant, à la première entité de réseau (1) ou à l'entité de desserte (3), une adresse d'une troisième base de données, dans lequel :
l'identification est un numéro de téléphone, tel que défini dans la norme E.164 de l'ITU-T, contenant comme première partie, un indicatif de pays et, comme seconde partie, une partie numéro national de la seconde entité de réseau,
la seconde base de données (6) est une base de données de portabilité de numéro pour localiser des numéros portés ;
la troisième base de données est un serveur de mobilité d'utilisateur, UMS (12), stockant la mobilité du service ou délivrant aux utilisateurs des informations concernant la fonction CSCF ;
le serveur de mobilité d'utilisateur (12) retourne l'adresse d'une fonction de contrôle d'état d'appel, CSCF, (10) de la seconde entité de réseau ; et
la première entité de réseau (1) initie un établissement d'appel vers la CSCF (10) de la seconde entité de réseau.

2. Procédé selon la revendication 1, dans lequel la première entité de réseau est une entité de départ de communication.

3. Procédé selon la revendication 2, dans lequel l'entité de départ de communication est une fonction de contrôle d'état d'appel, CSCF, un centre de commutation mobile, MSC, ou un serveur MSC.

4. Procédé selon l'une quelconque des revendications précédentes, dans lequel la seconde entité de réseau est une entité d'arrivée de terminaison.

5. Procédé selon l'une quelconque des revendications précédentes, dans lequel la première base de données est stockée dans un serveur DNS.

6. Procédé selon l'une quelconque des revendications précédentes, dans lequel la troisième base de données est stockée dans un serveur de mobilité d'utilisateur maître qui envoie une demande d'emplacement au serveur de mobilité d'utilisateur.

7. Procédé selon la revendication 6, dans lequel le serveur de mobilité d'utilisateur retourne l'adresse Internet au serveur de mobilité d'utilisateur maître qui transmet celle-ci à la première entité de réseau.

8. Procédé selon l'une quelconque des revendications précédentes, dans lequel l'adresse Internet est une adresse IP (protocole Internet).

9. Système pour établir une connexion entre une première entité de réseau (1) située dans un premier réseau (2) et une seconde entité de réseau (14, 17) située dans un second réseau (5, 9), dans lequel la première entité de réseau (1) ou une entité de desserte (3) sont adaptées pour envoyer une identification de l'entité d'arrivée de communication contenant une première et une seconde parties, à un premier dispositif de base de données (4) stockant une table pour traduire la première partie en une adresse Internet d'un second dispositif de base de données (6) assigné à une partie du réseau indiquée par la première partie, le premier dispositif de base de données (4) étant adapté pour retourner cette adresse Internet à la première entité de réseau (1) ou à l'entité de desserte (3) qui sont adaptées pour adresser le second dispositif de base de données (6) à l'aide de l'adresse Internet de celui-ci et pour indiquer l'identification ou au moins la seconde partie de celui-ci, le second dispositif de base de données (6) étant adapté pour retourner, à la première entité de réseau (1) ou à l'entité de desserte (3), une adresse d'un troisième dispositif de base de données (12) pour établir une connexion vers la seconde entité de réseau,
dans lequel l'identification est un numéro de téléphone, tel que défini dans la norme E.164 de l'ITU-T, contenant comme première partie, un indicatif de pays et, comme seconde partie, une partie numéro national de la seconde entité de réseau, et
le second dispositif de base de données (6) est une base de données de portabilité de numéro pour localiser des numéros portés ;
le troisième dispositif de base de données (12) est un serveur de mobilité d'utilisateur, UMS, stockant la mobilité du service ou délivrant aux utilisateurs des informations concernant la fonction CSCF ;
le serveur de mobilité d'utilisateur (12) est adapté pour retourner l'adresse d'une fonction de contrôle d'état d'appel, CSCF, (10) de la seconde entité de réseau ; et
la première entité de réseau (1) est adaptée pour initier un établissement d'appel vers la CSCF (10) de la seconde entité de réseau.

10. Système selon la revendication 9, dans lequel la première entité de réseau est une entité de départ de communication.

11. Système selon les revendications 9 ou 10, dans lequel la seconde entité de réseau est une entité de terminaison de communication.

12. Système selon l'une quelconque des revendications 9 à 11, dans lequel le premier dispositif de base de données est stocké dans un serveur DNS, ou une partie de serveur DNS.

13. Système selon l'une quelconque des revendications 9 à 12, dans lequel le second dispositif de base de données est contenu dans un serveur de mobilité d'utilisateur maître qui est adapté pour envoyer une demande d'emplacement au serveur de mobilité d'utilisateur qui retourne l'adresse Internet de la seconde entité de réseau, ou l'adresse Internet d'un dispositif de contrôle (10, 16) contrôlant la communication avec la seconde entité de réseau.

14. Système selon la revendication 13, dans lequel le serveur de mobilité d'utilisateur est adapté pour retourner l'adresse Internet au serveur de mobilité d'utilisateur maître qui transmet celle-ci à la première entité de réseau.
